# EUROPEAN PATENT APPLICATION

(11) **EP 3 933 745 A1**
(43) Date of publication of application: **05.01.2022**
(21) Application number: 20782426.9
(22) Date of filing: 13.03.2020
(51) Int. Cl.: G06Q 50/08

(54) **SKILL INFORMATION PRESENTATION SYSTEM AND SKILL INFORMATION PRESENTATION METHOD**

(30) Priority: 05.04.2019 JP 2019073063
(71) Applicant: KOBELCO CONSTRUCTION MACHINERY CO., LTD., Hiroshima-shi Hiroshima 731-5161 (JP)
(72) Inventor: SASAKI, Hitoshi, Saeki-ku, Hiroshima-shi Hiroshima 731-5161 (JP); SAIKI, Seiji, Saeki-ku, Hiroshima-shi Hiroshima 731-5161 (JP); YAMAZAKI, Yoichiro, Saeki-ku, Hiroshima-shi Hiroshima 731-5161 (JP)
(74) Representative: TBK
(86) International application number: PCT/JP2020/011063
(87) International publication number: WO 2020/203170

(57) **Abstract**

A skill information presentation system includes a server including: a skill level calculation part which calculates, based on manipulation skill information, a manipulation skill level which is a level of a manipulation skill, and calculates, based on necessary skill information, a necessary skill level which is a level of a necessary skill; an operator information database which stores operator information including the manipulation skill level and the necessary skill level; and a presentation part which presents the operator information to the orderer terminal.

## Description

### Technical Field

The present invention relates to a technology of presenting information about a skill of an operator who manipulates a construction machine.

### Background Art

Patent Literature 1 discloses a manipulation assistive device for a working machine as a technology of evaluating a skill of an operator who manipulates a construction machine. The manipulation assistive device calculates a work performance for evaluating a work efficiency and a skill level from a state quantity of each of a work quantity, a work time, and a fuel consumption quantity in an operation or a work using the working machine. Patent Literature 1 discloses that the operator can grasp his/her own work efficiency and skill level from the actual work performance presented to the operator (paragraph [0011] of Patent Literature 1).

Technologies of remotely manipulating construction machines have been developed in recent years. However, Patent Literature 1 merely discloses the manipulation assistive device for evaluating the skill level only from the state quantity of each of the actual work quantity, the actual work time, and the fuel consumption quantity, and fails to disclose any technology of appropriately evaluating a skill of an operator who performs an operation or a work to be executed by such a construction machine by a remote manipulation. More details will be described below.

Establishment of a remote manipulation system for remotely manipulating the construction machine would allow an orderer to widely collect operators to thereby ensure sufficient operators. The establishment of the remote manipulation system would further eliminate the necessity for each operator to visit an operation site, and thus allow the operator to work in such a flexible manner as to select a different operation site depending on a time range. Here, an index for allowing the orderer to safely select an operator who meets the needs of the orderer from a plurality of operator candidates is required to effectively utilize the aforementioned advantages of the remote manipulation system. The index must be available to appropriately evaluate the skill of each of the operators.

Meanwhile, each operator needs to remotely manipulate the construction machine while confirming an image of an actual operation site displayed on a screen of a display device provided in a remote location away from the operation site. The amount of information obtainable by the operator in the remote location about various situations on the operation site and about other worker and other construction machine in this case is much smaller than that obtainable in a case where the operator sits on an operator seat of the construction machine on the operation site and manipulates the construction machine.

From this perspective, the operator is desired to have a manipulation skill for remotely manipulating the construction machine and further a necessary skill which is a skill of the operator other than the manipulation skill and necessary for an operation or a work to be executed by the construction machine by the above-described remote manipulation to smoothly proceed with the operation or work of the construction machine by the remote manipulation. Specifically, the operator is, for example, desired to have a necessary skill which is necessary to appropriately cope with the various situations on the operation site and consider other worker and other construction machine, in addition to the manipulation skill.

In this respect, the manipulation assistive device of Patent Literature 1 for evaluating the skill level only from the state quantity of each of the work quantity, the work time, and the fuel consumption quantity fails to evaluate the aforementioned necessary skill of the operator other than the manipulation skill.

### Citation List

### Patent Literature

Patent Literature 1: Japanese Unexamined Patent Publication No. 2016-141940

### Summary of Invention

An object of the present invention is to provide a skill information presentation system and a skill information presentation method for presenting, to an orderer, information about a manipulation skill of an operator and information about a necessary skill which is a skill of the operator other than the manipulation skill and necessary for an operation or a work to be executed by a construction machine.

The skill information presentation system according to one aspect of the present invention is a system for presenting information about a skill of a remote manipulation of a construction machine. The skill information presentation system includes a server communicably connected to an orderer terminal which allows an orderer to place an order for an operation to be executed by the construction machine by the remote manipulation, and communicably connected to a remote manipulating device for remotely manipulating the construction machine. The server includes: an acquisition part which acquires manipulation skill information about a manipulation skill of one operator, among a plurality of operators, who has remotely manipulated the construction machine by using the remote manipulating device, and further acquires necessary skill information about a necessary skill of the operator other than the manipulation skill and necessary for the operation of the construction machine; a manipulation skill information database which stores the manipulation skill information; a necessary skill information database which stores the necessary skill information; a skill level calculation part which calculates, based on the manipulation skill information, a manipulation skill level which is a level of the manipulation skill, and calculates, based on the necessary skill information, a necessary skill level which is a level of the necessary skill; an operator information database which stores operator information including the manipulation skill level and the necessary skill level; and a presentation part which presents the operator information to the orderer terminal.

### Brief Description of Drawings

Fig. 1 is a block diagram showing an overall configuration of a skill information presentation system according to an embodiment of the present invention.
Fig. 2 shows an overview of a remote manipulating device included in the skill information presentation system.
Fig. 3 shows specific exemplary manipulation skill information stored in a manipulation skill information database in a server included in the skill information presentation system.
Fig. 4 shows a table of machine model information having lists of machine types, machine models, working device types, and leading end ATT types.
Fig. 5 shows an exemplary formula for calculating a manipulation skill level.
Fig. 6 shows specific exemplary necessary skill information stored in a necessary skill information database in the server of the skill information presentation system.
Fig. 7 shows specific exemplary necessary operation order information stored as employment information in an employment information database in the server of the skill information presentation system.
Fig. 8 shows specific exemplary operator information including a manipulation skill level and a necessary skill level of an operator.
Fig. 9 shows a specific exemplary rank determination table.
Fig. 10 shows a specific exemplary operator information database.
Fig. 11 is a flowchart showing a flow of placing and receiving an order for an operation of the construction machine by adopting the skill information presentation system according to the present embodiment.
Fig. 12 shows a specific exemplary detail screen image which displays work team candidates presented by a presentation part included in the server.

### Description of Embodiments

It should be noted that the following embodiment illustrates one example of the invention, and does not delimit the technical protection scope of the present invention.

Hereinafter, a skill information presentation system and a skill information presentation method according to the embodiment of the present invention will be described.

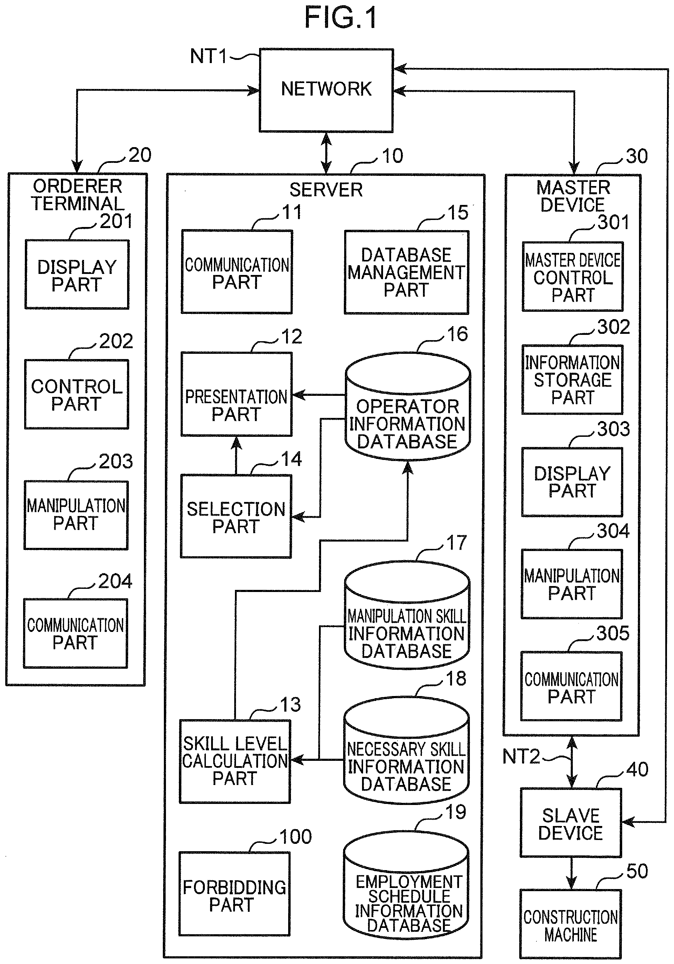

Fig. 1 is a block diagram showing an overall configuration of the skill information presentation system according to the embodiment. The skill information presentation system includes a server 10. The server 10 is connected to an orderer terminal 20, a master device 30, and a slave device 40 communicably with one another via a communication channel NT1.

The master device 30 is an exemplary remote manipulating device for remotely manipulating the construction machine 50. The server 10 is a device for presenting a skill of an operator who manipulates the construction machine 50 by using the master device 30. The orderer terminal 20 is a device which allows an orderer to place an order to the operator for an operation to be executed by the construction machine 50 by a remote manipulation.

The slave device 40 includes a subordinate operating device arranged at an operating seat device of the construction machine 50 for handling a manipulation lever located at the operating seat device of the construction machine 50 based on a manipulative amount received by the master device 30. The slave device 40 serves as a dummy of the operator to manipulate the construction machine 50. The construction machine 50 includes a hydraulic excavator, a hydraulic crane, and the like to be remotely manipulated.

The communication channel NT1 includes a long-distance communication network formed of, for example, Internet and a mobile phone communication network. The master device 30 and the slave device 40 are communicably connected to each other via the communication channel NT2. The communication channel NT2 includes a long-distance communication network in the same manner as the communication channel NT1. Further, the communication channel NT2 may include a communication network, such as a specified low power radio, Bluetooth (registered trademark), or a wireless local area network (LAN), which enables the master device 30 and the slave device 40 to wirelessly communicate with each other at a distance of several tens to hundreds of meters therebetween. However, the communication channels merely show examples, and thus at least one of the communication channel NT1 and the communication channel NT2 may be formed of, for example, a wired communication network.

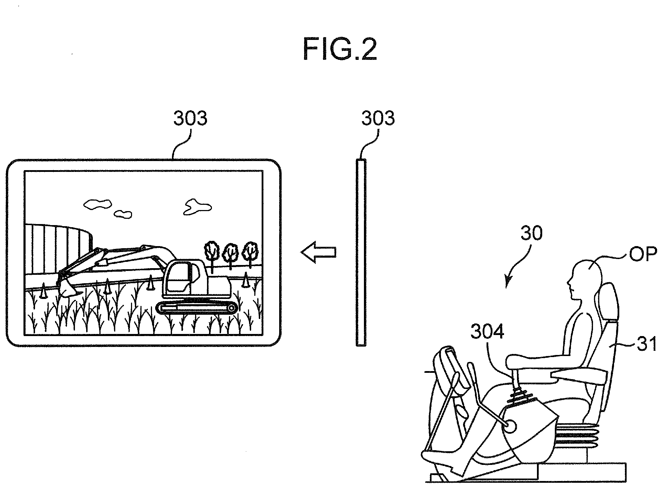

Fig. 2 shows an overview of the master device 30 included in the skill information presentation system. As shown in Figs. 1 and 2, the master device 30 includes a master device control part 301, an information storage part 302, a display part 303, a manipulation part 304, and a communication part 305.

The master device control part 301 includes, for example, a processor such as a CPU, and controls the entirety of the master device 30.

Specifically, for example, the master device control part 301 requests the operator to input an access code for allowing the operator to remotely manipulate the construction machine 50 by using the master device 30, executes an authentication process by using the input access code, and permits the operator to execute the remote manipulation when approving the authentication. Conversely, the master device control part 301 avoids permitting the operator to execute the remote manipulation when disapproving the authentication. Here, the master device 30 and the slave device 40 store their access codes in their respective memories (not shown). The master device control part 301 sends the input access code to the slave device 40 via the communication part 305 after confirming that the input access code matches the access code stored in the memory. The slave device 40 sends a permission reply to the master device 30 after confirming that the received access code matches the access code stored in the memory. The master device control part 301 establishes a communication connection between the communication part 305 and the slave device 40 when the communication part 305 receives the permission reply. Thereafter, the master device control part 301 sends, to the slave device 40 via the communication part 305, the manipulative amount input to the manipulation part 304 by the operator at every time of the input to thereby move the slave device 40. This enables the operator to perform an operation of the construction machine 50 by manipulating the manipulation part 304 of the master device 30. The access code may be, for example, an operator ID to be described later, or a password set independently of the operator ID.

The master device control part 301 acquires manipulation skill information of the operator, and causes the information storage part 302 to store the acquired manipulation skill information of the operator while the operator remotely manipulates the construction machine 50 by using the master device 30. The manipulation skill information is information about a manipulation skill of the operator having remotely manipulated the construction machine 50 by using the master device 30. The master device control part 301 acquires a part of or whole of necessary skill information of the operator, and causes the information storage part 302 to store the acquired necessary information in the operation of the construction machine 50. The necessary skill information is information about a necessary skill of the operator other than the manipulation skill and necessary for the operation of the construction machine 50.

The master device control part 301 sends the manipulation skill information and the necessary skill information to the server 10 via the communication part 305 after the finish of the operation of the construction machine 50. Moreover, a part of or whole of the necessary skill information may be sent from the orderer terminal 20 to the server 10 in accordance with a content of the necessary skill information.

The display part 303 includes a display device, such as a liquid crystal display, and displays a peripheral image of the construction machine 50. As shown in Fig. 2, the master device 30 further includes a seat 31 for allowing the operator to sit thereon, and the display part 303 is arranged in front of the seat 31.

The manipulation part 304 is a device for receiving a manipulation of the operator. The manipulation part 304 includes a manipulation lever similar to that provided at the operating seat device of the construction machine 50. Specifically, the manipulation part 304 includes a plurality of manipulation levers each tiltable in a front-rear direction and/or a left-right direction. When the operator tilts a specific manipulation lever, a manipulative amount corresponding to an amount of the tilting is sent to the slave device 40 via the communication channel NT2 to thereby cause the slave device 40 to tilt the manipulation lever of the construction machine 50 corresponding to the manipulation lever tilted by the operator in accordance with the manipulative amount. As a result, the operator can remotely manipulate the construction machine 50 by handling the manipulation lever of the manipulation part 304 while seeing the peripheral image displayed on the display part 303.

The communication part 305 includes a communicator connecting the master device 30, and the communication channel NT1 and the communication channel NT2 to each other.

The server 10 is constituted by a computer including a processor, such as a CPU, and a communication function. As shown in Fig. 1, the server 10 includes a communication part 11 (exemplary acquisition part), a presentation part 12, a skill level calculation part 13, a selection part 14, a database management part 15, databases, and a forbidding part 100. In the embodiment, the databases include an operator information database 16, a manipulation skill information database 17, a necessary skill information database 18, and an employment information database 19. Data in the various databases shown in Fig. 1 is stored in the memory included in the server 10. Moreover, in Fig. 1, each of the presentation part 12, the skill level calculation part 13, the selection part 14, the database management part 15, and the forbidding part 100 comes into effect when the CPU executes a corresponding program stored in the memory.

The communication part 11 includes, for example, a communicator which connects the server 10 and the communication channel NT1 to each other, and receives master device information sent from the master device 30. The master device information includes the manipulation skill information and a part of or whole of the necessary skill information. Besides, the communication part 11 receives orderer information from the orderer terminal 20. The orderer information includes: employment information sent from the orderer terminal 20 and including work item information about a work item of the operation of the construction machine 50; a query request for inquiring a skill level including a manipulation skill level and a necessary skill level of a specific operator from the orderer terminal 20; and a part of or whole of the necessary skill information.

The presentation part 12 presents the skill level to the orderer terminal 20. Specifically, when the communication part 11 receives the query request from the orderer terminal 20, the presentation part 12 reads out the skill level of the corresponding operator from the operator information database 16 and sends the read skill level to the orderer terminal 20 via the communication part 11. When the skill level calculation part 13 to be described later calculates the skill level, the presentation part 12 further sends the calculated skill level to the master device 30 via the communication part 11.

The skill level calculation part 13 calculates, based on the manipulation skill information, a manipulation skill level which is a level of the manipulation skill, and calculates, based on the necessary skill information, a necessary skill level which is a level of the necessary skill. The calculation of each skill level will be described in detail later.

The selection part 14 selects, based on information including the operator information and the work item information, at least one operator candidate for performing an operation of the construction machine 50 from the operators. The selection part 14 may select, based on the information including the operator information and the work item information, at least one work team candidate for performing the operation of the construction machine 50 from the operators.

When the communication part 11 receives the master device information from the master device 30, the database management part 15 causes one of the manipulation skill information database 17 and the necessary skill information database 18 to store the master device information. Specifically, when the received master device information indicates the manipulation skill information, the database management part 15 causes the manipulation skill information database 17 to store the manipulation skill information. When the received master device information indicates the necessary skill information, the database management part 15 causes the necessary skill information database 18 to store the necessary skill information. When the communication part 11 receives the employment information from the orderer terminal 20, the database management part 15 causes the employment information database 19 to store the employment information. When the communication part 11 receives the necessary skill information from the orderer terminal 20, the database management part 15 causes the necessary skill information database 18 to store the necessary skill information.

The manipulation skill information database 17 stores respective manipulation skill information of the operators entered in the server 10. Specifically, the manipulation skill information database 17 is made to associate each of the operators and the corresponding manipulation skill information of the operator with each other, and stores the necessary skill information of the operator as a history. When a specific operator has actual work performances for a plurality of operations or works, the manipulation skill information database 17 stores a plurality of pieces of manipulation skill information corresponding to the operations or works for the operator. The manipulation skill information includes information about an actual work performance representing an actual performance of the operator having performed the operation or work of the construction machine 50 by the remote manipulation.

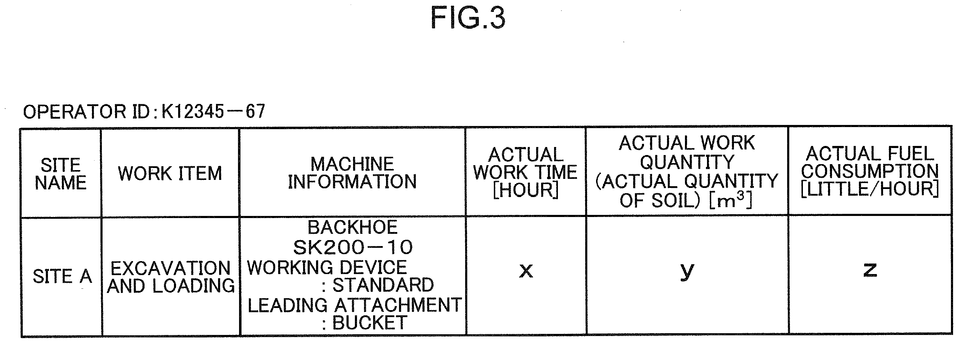

Fig. 3 shows exemplary information about the actual work performance included in the manipulation skill information stored in the manipulation skill information database 17. In the specific example shown in Fig. 3, the information about the actual work performance stored in the manipulation skill information database 17 includes an operator ID, a site name, a work item, machine information, an actual work time, and an actual work quantity, and an actual fuel consumption.

The operator ID represents identification information for uniquely identifying each of the operators entered in the server 10.

The site name represents information for specifying a site where an operation has been actually executed.

The operation of the construction machine 50 includes work items of, for example, "excavation and loading", "flat ground preparation", "flat ground forming", "slope preparation", and "slope forming". The work item of excavation and loading represents a work of excavating soil, ground, bedrock, and the like, and loading the excavated ones onto a dump truck. The work item of flat ground forming represents a work of forming the flat ground by removing unevenness of the ground. The work item of flat ground preparation represents a work of preparing the flat ground by way of the flat ground forming. The work item of slope forming represents a work of forming the slope which is artificially made by removing the soil from the ground or adding the soil to the ground. The work item of slope preparation represents a work of preparing the slope formed by way of the slope forming. However, the work items listed above are mere examples, and the operation of the construction machine 50 may include other work items.

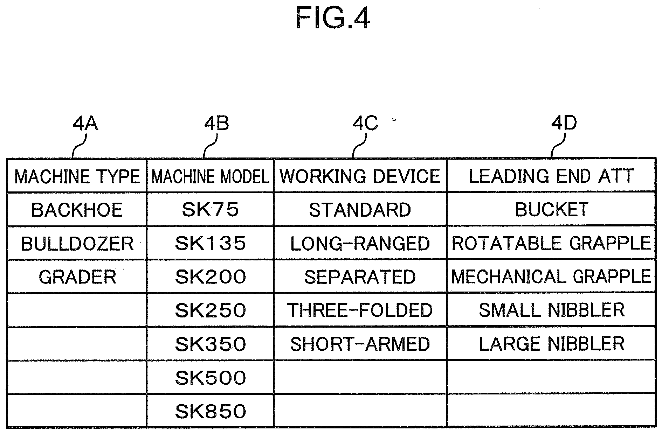

The machine information includes information about, for example, a type and a model of the construction machine 50, a working device type, and a leading end attachment type, each actually adopted in the operation. Fig. 4 having lists of types of the construction machine 50, models of the construction machine 50, working device types for the construction machine 50, and leading end attachment (leading ATT) types for the construction machine 50. As shown in column 4A, the types of the construction machine 50 in the embodiment include "BACKHOE", "BULLDOZER", and "GRADER". As shown in column 4B, the models of the construction machine 50 in the embodiment include "SK75", "SK135", "SK200", a "SK250" and other machine models. The machine model with a larger model number has a greater maximal excavation force. As shown in column 4C, the working device types in the embodiment include five types of "STANDARD", "LONG-RANGED", "SEPARATED," "THREE-FOLDED", and "SHORT-ARMED". As shown in column 4D, the leading end attachment types in the embodiment include five types of "BUCKET", "ROTATABLE GRAPPLE", "MECHANICAL GRAPPLE", "SMALL NIBBLER", and "LARGE NIBBLER".

The actual work time is a time in which an operation or a work to be executed by the construction machine 50 has been actually performed by the operator by the remote manipulation. The actual work time represents a time period from a start to a finish of the operation or work of the construction machine 50. In this respect, when the operation or work of the construction machine 50 needs a plurality of days, the relevant actual work time indicates a total value (cumulative value) of the work time over the days.

For instance, the master device control part 301 of the master device 30 acquires the start and the finish of the operation or work, and can calculate, based on the acquired start and finish, the actual work time. The master device control part 301 causes the information storage part 302 to store the calculated actual work time. The master device control part 301 can determine each of the start and the finish in response to, for example, an input (e.g., switching action) of the operator received by an unillustrated input part of the master device 30. The master device control part 301 may cause the information storage part 302 to store, as the actual work time, a time input by the operator via the input part after the finish of the operation or work.

The actual work quantity is a work quantity in which the operation or work of the construction machine 50 has been actually performed by the operator by the remote manipulation. When the operation of the construction machine 50 includes, for example, the work item "excavation and loading", the actual work quantity may represent a total quantity (cumulative quantity) of the soil obtained from the ground excavated from the start to the finish of the relevant work. In this case, for example, the master device control part 301 can acquire the actual work quantity by calculating, based on a load detected by an unillustrated load detection sensor provided in a working device of the construction machine 50, a soil quantity loaded to a bucket of the construction machine 50 per loading to the bucket, and calculating the total soil quantity from the start to the finish of the work.

The actual work quantity may represent, for example, a total quantity (cumulative quantity) of the soil obtained by excavating the ground and loading the soil from the excavated ground to the dump truck during the time period from the start to the finish of the work. In this case, for example, the master device control part 301 can acquire the actual work quantity by acquiring, based on a load detected by an unillustrated load detection sensor provided in the dump truck, a soil quantity loaded to the dump truck per dump truck and calculating a total soil quantity obtained during the time period from the start to the finish of the work.

The master device control part 301 may cause the information storage part 302 to store, as the actual work quantity, a work quantity input by the operator via the input part after the finish of the work.

The actual fuel consumption represents a fuel consumption actually made in the operation or work of the construction machine 50 by the remote manipulation by the operator. For instance, the master device control part 301 can calculate, based on a driving time and a fuel consumption quantity of the construction machine 50, an actual fuel consumption. The driving time may adopt, for example, a value equal to the value of the actual work time, or only a section of the actual work time in which the engine of the construction machine 50 is driven. For instance, the master device control part 301 can acquire the fuel consumption quantity of the fuel consumed during the time period from the start to the finish of the operation or work in response to a signal output from a fuel residual quantity sensor provided in a fuel tank of the construction machine 50.

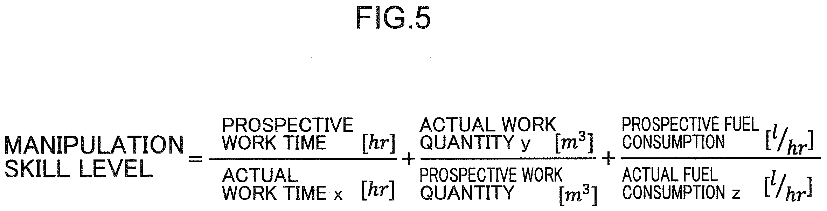

Fig. 5 shows an exemplary formula for calculating a manipulation skill level. In the specific example shown in Fig. 5, the manipulation skill level is calculated by using a formula including a term concerning the work time, a term concerning the work quantity (soil quantity), and a term concerning the fuel consumption. As clearly seen from the formula shown in Fig. 5, the value of the manipulation skill level of the operator indicates "3", when the actual work time equals to the prospective work time, the actual work quantity (actual soil quantity) equals to the prospective work quantity (prospective soil quantity), and the actual fuel consumption equals to the prospective fuel consumption. In other words, the manipulation skill level in a case where an actual work has been completed as estimated indicates the value of "3". It is seen from this perspective that the manipulation skill of the operator is higher than a standard when the value of the calculated manipulation skill level is greater than "3", and that the manipulation skill of the operator is lower than the standard when the value is smaller than "3". In the embodiment, the maximum value of the manipulation skill level is set to "5". Specifically, when the value of the manipulation skill level calculated by using the formula shown in Fig. 5 indicates 5 or more, the skill level calculation part 13 sets the manipulation skill level to "5".

The database management part 15 causes the operator information database 16 to store the manipulation skill level calculated by the skill level calculation part 13.

The necessary skill information database 18 stores respective necessary skill information of the operators entered in the server 10. Specifically, the necessary skill information database 18 is made to associate each of the operators and the corresponding necessary skill information of the operator with each other, and store the necessary skill information of the operator as a history. When a specific operator has actual work performances for a plurality of operations or works, the necessary skill information database 18 stores a plurality of pieces of necessary skill information corresponding to the operations or works for the operator.

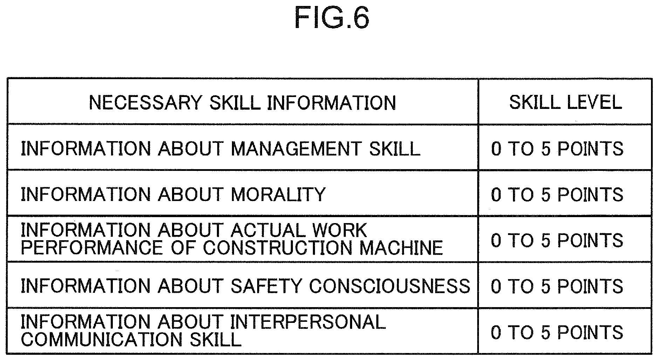

Fig. 6 shows specific exemplary necessary skill information stored in the necessary skill information database in the server of the skill information presentation system. In the specific example shown in Fig. 6, the necessary skill information includes information about a management skill, information about morality, information about the actual work performance of the operation of the construction machine, information about safety consciousness, and information about an interpersonal communication skill. In the embodiment, the necessary skill information includes the aforementioned five pieces of skill information.

As shown in Fig. 6, the skill level calculation part 13 calculates, based on the five pieces of skill information, corresponding skill levels. In the embodiment, each of the skill levels falls within the range of 0 to 5 points.

The management skill is a skill of the operator required to perform at least one of administration and planning of an operation of the construction machine 50. The orderer can determine, based on the presented level of the management skill of the operator, whether the operator has a skill of performing at least one of the administration and planning of the operation of the construction machine.

The information about the management skill includes, for example, information about a skill of planning an operation schedule for an entire operation of the construction machine 50, information about a skill of deciding arrangements of the operation of the construction machine 50, and information about a skill of administrating an operation site where a plurality of operators performs the operation of the construction machine 50.

When the orderer supervises the operation of the construction machine 50, the orderer makes a score for the management skill of each of the operators in the operation after the completion of the corresponding work by the operator. Information about the management skill is sent as a score result from the orderer terminal 20 to the server 10. The sent score result concerning the management skill of each of the operators is stored as the necessary skill information in the necessary skill information database 18. The skill level calculation part 13 stores a table having a relation between the score result and the level of the management skill associated with each other, and calculates (generates) a level of the management skill of each of the operators with reference to the table. The calculated level of the management skill is stored in the operator information database 16.

Next, the information about the morality will be described. The morality is necessary for an operation or a work of the construction machine 50. The orderer can determine, based on the level of the morality of the operator presented to the orderer terminal 20, whether the operator has a skill of considering other operator or other worker.

The information about the morality includes, for example, information as to whether the operator executes a preliminarily forbidden action in an operation or a work of the construction machine 50, information as to whether the operator starts the operation or work at a predetermined start time for the work, and information as to whether the operator canceled the operation or work without any notification.

When the orderer supervises the operation of the construction machine 50, the orderer makes a score for the morality of each of the operators in the operation after the completion of the corresponding work by the operator. The information about the morality is sent as a score result from the orderer terminal 20 to the server 10. The sent score result concerning the morality of each of the operators is stored as the necessary skill information in the necessary skill information database 18. The skill level calculation part 13 stores a table having a relation between the score result and the level of the morality associated with each other, and calculates (generates) a level of the morality of each of the operators with reference to the table. The calculated level of the morality is stored in the operator information database 16.

Next, information about the actual work performance of the operation of the construction machine 50 will be described. The information about the actual work performance of the operation of the construction machine 50 includes information about the aforementioned actual work performance information shown in Fig. 3. The orderer can determine, based on the level of the actual work performance of the operator presented to the orderer terminal 20, whether the operator has a skill of appropriately coping with a situation on the site for the operation ordered by the orderer.

The necessary skill information database 18 stores information about one or more actual work performances of the operator sent from the master device 30. When the necessary skill information database 18 stores information of the actual work performances, the skill level calculation part 13 calculates, based on the information about the actual work performances of the operator, a total value of actual work times for each of work items, for example. Besides, the skill level calculation part 13 may calculate, based on the information of the actual work performances, a total value of actual work times for each of the models of the construction machine 50. The information about the actual work performance may include a name of a country where the operation of the construction machine 50 has been performed. The skill level calculation part 13 stores a table having a relation between the actual work performance and a level of the actual work performance associated with each other, and calculates (generates) a level of the actual work performance of each of the operators with reference to the table. The calculated level of the actual work performance is stored in the operator information database 16.

Furthermore, the information about the safety consciousness will be described. The information about the safety consciousness is information about safety consciousness necessary for the operation or work of the construction machine 50. The orderer can determine, based on the information about the safety consciousness of the operator presented to the orderer terminal 20, whether the operator has a skill of considering other operator or other worker.

The information about the safety consciousness includes, for example, information about the number of activations of a safety device (safety function) included in the construction machines 50 in the operation of the construction machine 50, information about the frequency of distracted driving of the operator in the operation of the construction machine 50, and information about the frequency of drowsy driving of the operator in the operation of the construction machine 50.

The number of activations of the safety device (safety function) is detected by an unillustrated sensor provided in the master device 30, and the information about the safety consciousness is sent as the detected number from the master device 30 to the server 10. The sent detected number concerning the operator is stored as the necessary skill information in the necessary skill information database 18. Regarding the distracted driving and the drowsy driving of the operator, the frequency of the distracted driving of the operator is detectable from taken image information about an image of the operator taken by an unillustrated image taking part provided in the master device 30, and the frequency of the drowsy driving of the operator is also detectable from the taken image information. The information about the safety consciousness is sent as a detected frequency from the master device 30 to the server 10. The sent detected frequency concerning the operator is stored as the necessary skill information in the necessary skill information database 18.

The skill level calculation part 13 stores a table having a relation between the detected number or frequency and the level of the safety consciousness associated with each other, and calculates (generates) a level of the safety consciousness of the operator with reference to the table. The calculated level of the safety consciousness is stored in the operator information database 16.

Additionally, the information about the interpersonal communication skill will be described. The information about the interpersonal communication skill includes information about an interpersonal communication skill necessary for the operation or work of the construction machine 50. The orderer can determine, based on the level of the interpersonal communication skill of the operator presented to the orderer terminal 20, whether the operator has a skill of considering other operator or other worker, and whether the operator can cooperate with the other operator in the operation.

The information about the interpersonal communication skill includes, for example, information about the number of talks and a time for the talks in connection with tasks in the operation of the construction machine 50, information about the number of languages available in such talks, and information about an actual usage performance of the languages available in the talks.

When the orderer supervises the operation of the construction machine 50, the orderer makes a score for the interpersonal communication skill of each of the operators after the completion of a corresponding work of the operator. The information about the interpersonal communication skill is sent as a score result from the orderer terminal 20 to the server 10. The sent score result concerning the interpersonal communication skill of the operator is stored as the necessary skill information in the necessary skill information database 18.

The skill level calculation part 13 stores a table having a relation between the score result and the level of the interpersonal communication skill associated with each other, and calculates (generates) a level of the interpersonal communication skill of the operator with reference to the table. The calculated level of the interpersonal communication skill is stored in the operator information database 16.

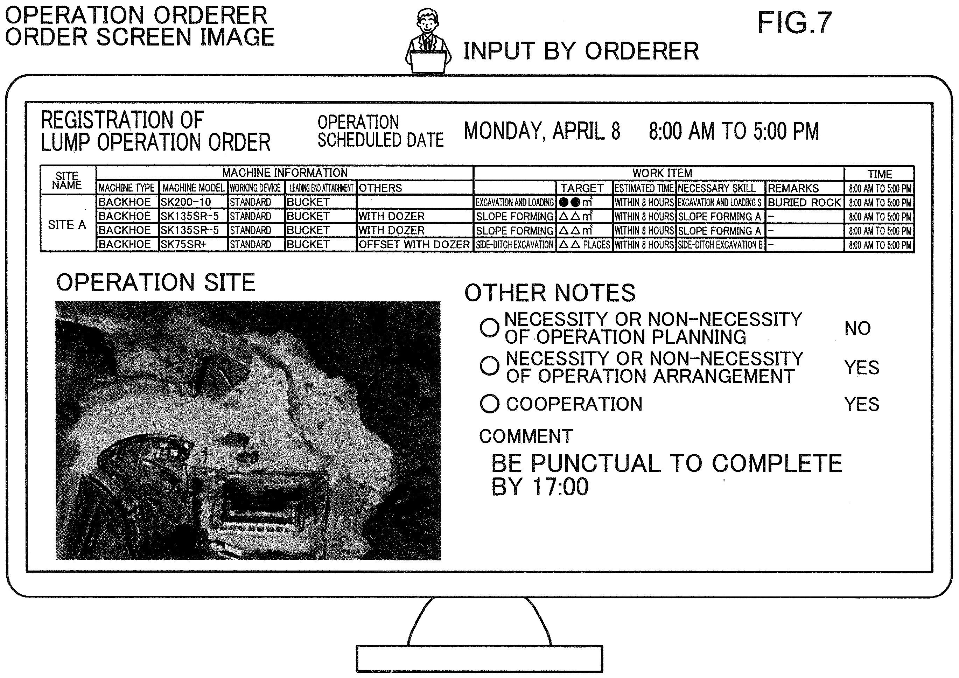

The employment information database 19 stores the employment information sent from the orderer terminal 20. Fig. 7 shows specific exemplary necessary operation order information stored as employment information in the employment information database 19 and displayed in the form of a detail screen image including information input by the orderer in the orderer terminal 20.

As shown in Fig. 7, the operation orderer information (employment information) includes work item information containing: a scheduled date for an operation of the construction machine 50; a plurality of pieces of machine model information for use in the operation; a plurality of work items displayed in relation to the respective pieces of machine model information. In the embodiment, the work item information shown in Fig. 7 includes first to fourth work item information corresponding to first to fourth work items of the operation of the construction machine 50.

The machine model information includes information, such as a type and a model of the construction machine 50, a working device type, and a leading end attachment type, to be adopted in each work. The machine type, the machine model, the working device type, and the leading end attachment type are equivalent to those described with reference to Fig. 4.

The work items further include a prospective work time (predetermined time), a prospective work quantity (target), a prospective fuel consumption, and a necessary skill in addition to the above-listed "excavation and loading", "flat ground preparation"," flat ground forming, "slope preparation", and "slope forming". The prospective fuel consumption is not shown in the screen image illustrated in Fig. 7, but is shown in another screen image different from the screen image illustrated in Fig. 7.

The prospective work time represents a time period estimated to be necessary to complete the operation or work of the construction machine 50. The prospective work time is predetermined by the orderer before the operator executes the remote manipulation. In the specific example shown in Fig. 7, the prospective work time is set to 8 hours (from 8:00 am to 5:00 pm, including 1 hour break).

The prospective work quantity represents a work quantity estimated to be necessary to complete the operation or work of the construction machine 50. The prospective work quantity is predetermined by the orderer before the operator executes the remote manipulation.

The prospective fuel consumption represents a fuel consumption estimated in the operation or work of the construction machine 50. The prospective fuel consumption is predetermined by the orderer before the operator executes the remote manipulation. For instance, the orderer determines the fuel consumption in the operation or work of the construction machine 50 in accordance with the machine model adopted in the operation or work, the work item, and setting of the driving mode.

The column "NECESSARY SKILL" in Fig. 7 includes request information about an actual work performance for the necessary skill.

Besides, the operation order information shown in Fig. 7 includes request information about a management skill. Specifically, as shown in Fig. 7, the column "NECESSITY OR NON-NECESSITY OF OPERATION PLANNING" is set to "NO", and the column "NECESSITY OR NON-NECESSITY OF OPERATION ARRANGEMENT" is set to "YES". Furthermore, the column "COOPERATION" is set to "YES". When either the column "NECESSITY OR NON-NECESSITY OF OPERATION PLANNING" or the column "NECESSITY OR NON-NECESSITY OF OPERATION ARRANGEMENT" is set to "YES", a management skill is required as a necessary skill of the operator. Moreover, when the column "COOPERATION" is set to "YES", a communication skill is required as the necessary skill of the operator.

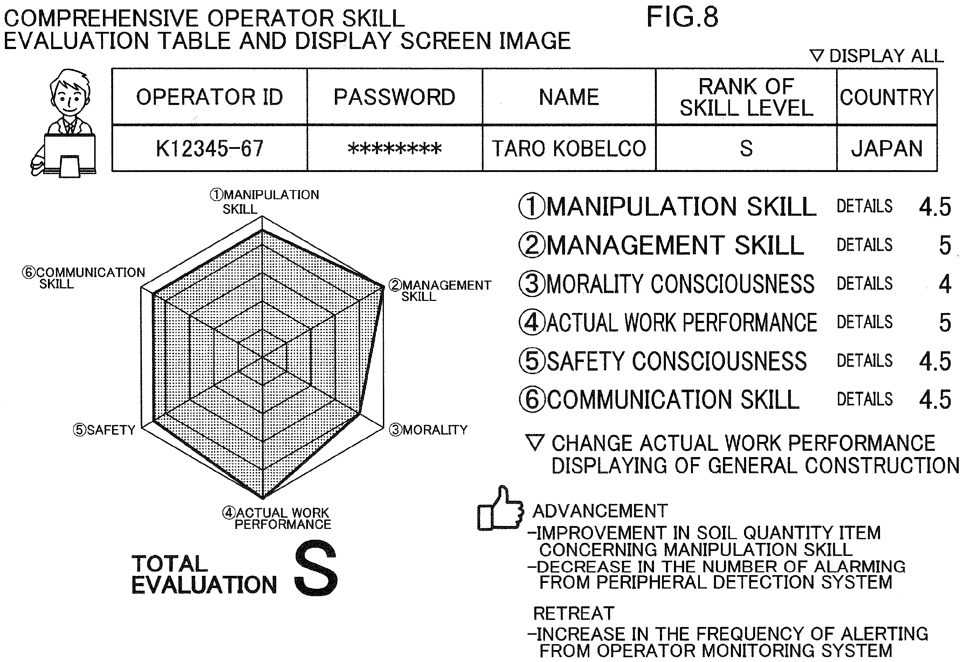

Fig. 8 shows specific exemplary operator information including a manipulation skill level and a necessary skill level of an operator and displayed as a detail screen image on the display part 201 of the orderer terminal 20 and the display part 303 of the master device 30.

In the specific example shown in Fig. 8, the manipulation skill level indicates 4.5, the management skill level indicates 5.0, the level of the morality indicates 4.0, the level of the actual work performance indicates 5.0, the level of the safety consciousness indicates 4.5, and the level of the communication skill indicates 4.5. A total value L of the six skill levels reaches 27.5.

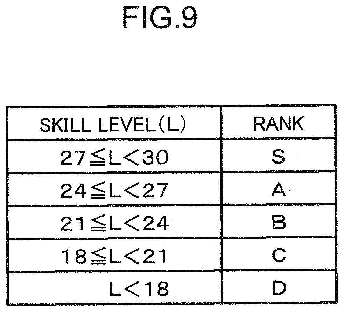

Fig. 9 shows a specific exemplary rank determination table. The skill level calculation part 13 determines, based on the total value L of the skill levels, the rank of the corresponding skill level of the operator as "S" with reference to the rank determination table shown in Fig. 9, and the determined rank "S" of the skill level is stored in the operator information database 16. The rank determination table is stored in the memory of the server 10 in advance, and includes columns of "SKILL LEVEL" and "RANK". In the specific example shown in Fig. 9, the five ranks of the skill levels are determined in descending order of S, A, B, C, and D. Therefore, the rank determination table registers ranks S to D in this order in the column "RANK". The column "SKILL LEVEL" has registration of a range of values of the corresponding skill level for each of the ranks S to D. The total value of the skill level L denoted by "27.5" in the specific example corresponds to the rank "S" with reference to the rank determination table.

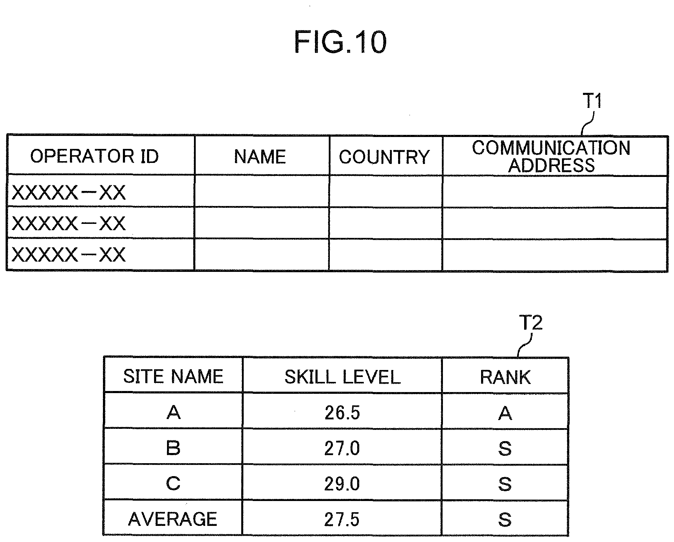

Fig. 10 shows a specific example of the operator information database 16. The operator information database 16 includes an operator table T1 and a skill level table T2. The operator table T1 registers personal information of operators entered in the server 10 in advance. The skill level table T2 registers the skill level of each of the entered operators per work item.

Specifically, the operator table T1 includes columns "OPERATOR ID", "NAME", "COUNTRY", and "COMMUNICATION ADDRESS". The column "OPERATOR ID" represents an identifier for uniquely identifying each of the entered operators. The column "NAME" represents the name of the operator. The column "COUNTRY" represents a country, such as Japan and Germany, where the operator lives. The column "COMMUNICATION ADDRESS" represents a communication address of the master device 30 to be used by the operator.

The skill level table T2 includes a database created for each of the entered operators per work item. The specific example shown in Fig. 10 includes a database of the work item "excavation and loading" for a specific operator. The database shows skill levels and ranks thereof for three sites A, B, and C, and further shows an average value of the skill levels, and the average rank.

The forbidding part 100 shown in Fig. 1 forbids the operator from executing an actual work mode when the skill level is lower than a reference level. The actual work mode is a mode for allowing the operator to actually and remotely manipulate the construction machine 50. In the embodiment, it is determined whether the skill level is equal to or lower than the reference level for each of the work items. For instance, the reference level is set to rank C. In the example shown in Fig. 10, the skill level for the excavation and loading is ranked "S", and thus the operator with this skill level is permitted to use the actual work mode for the work item "excavation and loading". Specifically, the operator can obtain a remuneration by actually and remotely manipulating the construction machine 50 for the work item.

More specifically, when permitting a specific operator to use the actual work mode, the forbidding part 100 sets a permission flag stored in a memory of the master device 30 of the operator to 1. For example, the specific operator is permitted to use the actual work mode for the work item "excavation and loading". In this case, the permission flag relevant to the work item "excavation and loading" stored in the memory of the master device 30 of the operator is set from "0" to "1". Here, when the operator makes a request for execution of an actual work concerning the work item by selecting the actual work mode in the master device 30, the master device control part 301 of the master device 30 accepts the request. In contrast, a setting flag for an impermissible work item is set to "0". In this case, when the operator makes a request for an execution of an actual work concerning the work item with the permission flag set to "0" by selecting the actual work mode in the master device 30, the master device control part 301 refuses the request.

The orderer terminal 20 includes a computer such as a personal computer owned by the orderer who places an operation order to the operator. The orderer is a person who makes an operation schedule for an operation, and places an order for the operation to the operator. The orderer is, for example, a worker belonging to an operation order placement company. The operator may be an employee employed by an operation order receiving company, or a self-business owner who is not directly employed by such an operation order receiving company.

The orderer terminal 20 includes a display part 201, a control part 202, a manipulation part 203, a communication part 204, and an unillustrated memory.

The display part 201 includes, for example, a display, such as a liquid crystal display. The control part 202 includes, for example, a processor such as a CPU, and controls the entirety of the orderer terminal 20. In the embodiment, when receiving from the orderer an input of an instruction for a query request to confirm a skill level of a specific operator, the control part 202 sends the query request including a relevant operator ID of the operator to the server 10 via the communication part 204.

The manipulation part 203 includes, for example, a keyboard and a mouse, and receives the input of the instruction for the query request to confirm the skill level. The communication part 204 includes a communicator which connects the orderer terminal 20 and the communication channel NT1 to each other, and transmits the query request received by the manipulation part 203 to the server 10 via the communication channel NT1.

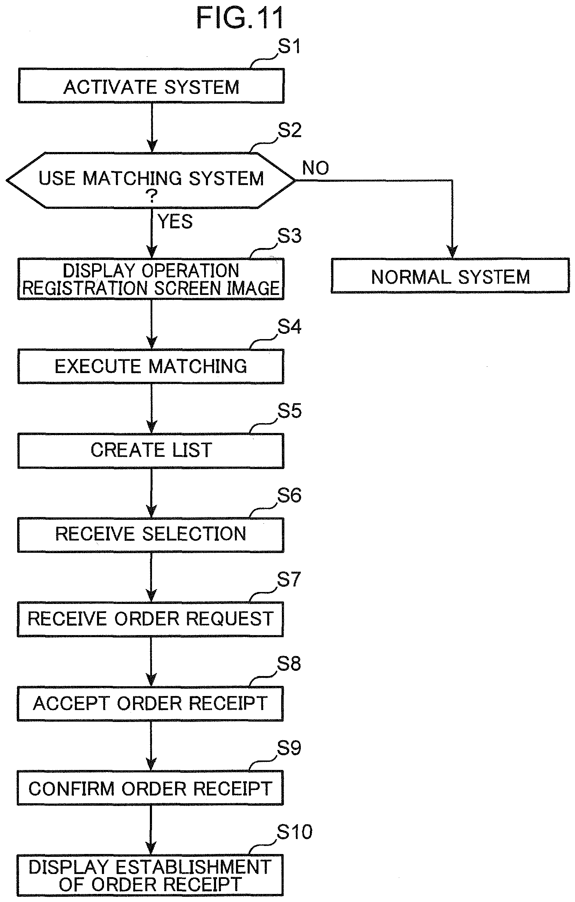

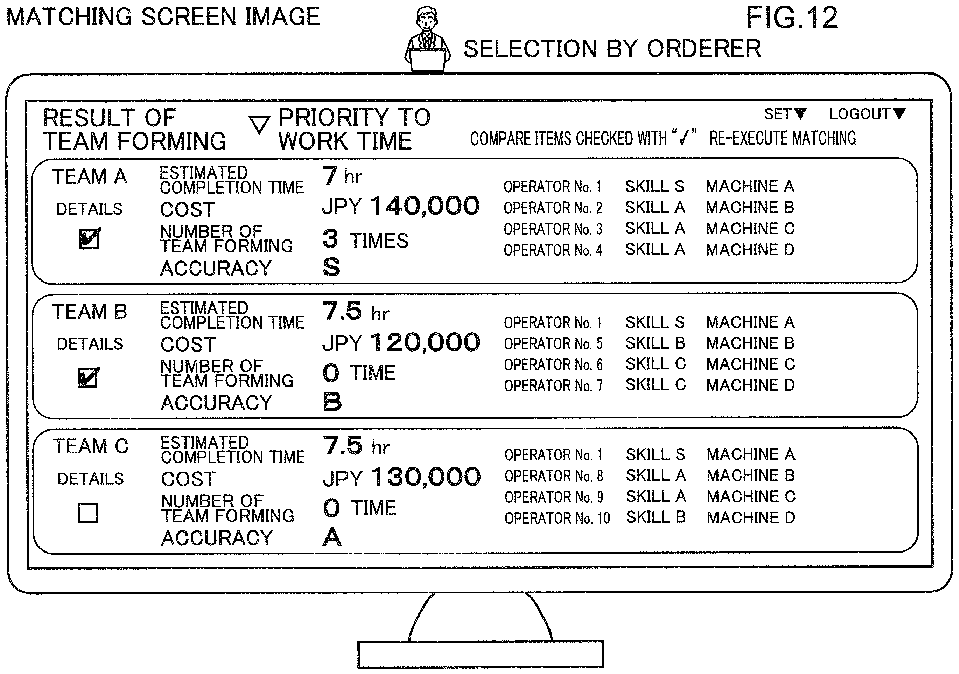

Hereinafter, an exemplary transaction between the orderer and the operator will be described Fig. 11 is a flowchart showing a flow of placing and receiving an order for an operation of the construction machine 50 adopting the skill information presentation system according to the present embodiment. Fig. 12 shows a specific exemplary detail screen image which displays work team candidates presented by the presentation part 12 included in the server 10.

First, the orderer terminal 20 sends a signal for activating the skill information presentation system to the server 10 in response to a start of a program of the system in the orderer terminal 20 (step S1 in Fig. 11).

The communication part 11 of the server 10 receives an instruction from the orderer terminal 20 as to whether to use a matching function (candidate selection function) in the skill information presentation system for presenting a candidate for a work team (step S2). When the communication part 11 of the server 10 receives an instruction from the orderer terminal 20 not to utilize the matching function (NO in Fig. 11), a matching system for automatically selecting an operator candidate or a work team candidate is not adopted. Instead, a normal system which performs no candidate selection is adopted.

When the communication part 11 of the server 10 receives an instruction of utilizing the matching function from the orderer terminal 20 (YES in Fig. 11), the presentation part 12 of the server 10 sends, to the orderer terminal 20, a signal of displaying an operation registration screen image for registering the employment information and displays the operation registration screen image on the orderer terminal 20 (step S3).

For instance, the orderer terminal 20 receives an input of the employment information (operation order information) from the orderer in the operation registration screen image shown in Fig. 7, and the orderer terminal 20 sends the input employment information to the server 10. The server 10 stores the received employment information in the employment information database 19.

Subsequently, the selection part 14 of the server 10 selects, based on the employment information and the operator information stored in the operator information database 16, an operator candidate or a work team candidate from a plurality of operators entered in the server 10 (step S4). The selection part 14 creates a list including the selected operator candidate or the selected work team candidate (step S5). The presentation part 12 sends the created list to the orderer terminal 20, and the orderer terminal 20 displays the list and receives a selection of the orderer (step S6).

In the embodiment, the list includes a work team A (candidate for a first work team), a work team B (candidate for a second work team), and a work team C (candidate for a third work team) as shown in Fig. 12. Upon receipt of a specific work team selected by the orderer from these candidates, the orderer terminal 20 sends information (an operation order request) of the selected work team to the server 10, and the communication part 11 of the server 10 receives the information (operation order request) of the selected work team (step S7).

Subsequently, the server 10 sends the information of the operation order request, which has been sent from the orderer terminal 20, to the master device 30 of the work team for the operation order request. When the master device 30 sends information of accepting the operation order request to the server 10 and the server 10 receives the information (step S8), an order receipt for the operation is confirmed (step S9). When the server 10 sends information about the order receipt confirmation to both the orderer terminal 20 and the master device 30, the display part 201 of the orderer terminal 20 and the display part 303 of the master device 30 display the order receipt confirmation (step S10). Furthermore, when the operator receives the order request, the server 10 issues an access code for the master device 30 as defining that the operator and the orderer reach an agreement therebetween, and sends the access code to the master device 30. The operator can consequently perform the operation ordered from the orderer by using the master device 30.

The entire flow of ordering and receiving an operation of the construction machine 50 by adopting the skill information presentation system is described heretofore.

Next, described is a process of selecting a work team candidate from a plurality of operators entered in the server 10 by the selection part 14 of the server 10, and presenting the selected work team to the orderer terminal 20 by the presentation part 12 in the skill information presentation system.

In the skill information presentation system according to the embodiment, the selection part 14 stores a plurality of priority criteria predetermined as selection criteria candidates preferentially applicable to select the work team candidate from the operators.

Specifically, the priority criteria include the following four priority criteria, that is, a criterion concerning a work time for an operation of the construction machine 50, a criterion concerning a cost incurring in the operation of the construction machine 50, a criterion concerning an accuracy of the operation of construction machine 50, and a criterion concerning a cooperability in the operation of the construction machine 50.

The selection part 14 can preferentially select, based on the criterion concerning the work time for the operation of the construction machine 50, a work team candidate capable of rapidly executing a work item included in employment information. The selection part 14 further can preferentially select, based on the criterion concerning the cost incurring in the operation of the construction machine 50, a work team candidate capable of executing the work item included in the employment information at a low cost. Moreover, the selection part 14 can preferentially select, based on the criterion concerning the accuracy of the operation of the construction machine 50, a work team candidate capable of accurately executing the work item included in the employment information. Additionally, the selection part 14 can preferentially select, based on the criterion concerning the cooperability in the operation of the construction machine 50, a work team candidate constituted by a plurality of operators who can efficiently cooperate with each other for the work item included in the employment information.

In the embodiment, a first priority criterion to be firstly prioritized among the four priority criteria is set to the criterion concerning the work time for the operation of the construction machine 50. Besides, a second priority criterion to be prioritized subsequent to the first priority criterion among the four priority criteria is set to the criterion concerning the cost incurring in the operation of the construction machine 50. Moreover, a third priority criterion to be prioritized subsequent to the second priority criterion among the four priority criteria is set to the criterion concerning the accuracy of the operation of the construction machine 50.

The employment information sent from the orderer terminal 20 to the server 10 includes first priority information for specifying the first priority criterion, second priority information for specifying the second priority criterion, and third priority information for specifying the third priority criterion.

As shown in Fig. 12, the selection part 14 firstly selects, based on the information including the operator information and the work item information, the work team A from the operators to satisfy the first priority criterion. As shown in Fig. 12, the work team A is selected as a team satisfying the first priority criterion of achieving a shorter "estimated completion time for an operation".

Specifically, in the embodiment, the first priority information is information for specifying the first priority criterion (criterion concerning the work time for the operation of the construction machine 50) to be firstly prioritized. The selection part 14 sets, based on the first priority information included in the employment information, the criterion concerning the work time for the operation of the construction machine 50 to the first priority criterion among the priority criteria, and stores the first priority criterion.

The first priority criterion is set, for example, as a criterion of completing the work item in the work item information included in the employment information shown in Fig. 7 within a predetermined time or shorter. The specific example shown in Fig. 12 includes the predetermined time of 7 hours.

The selection part 14 stores a table having a relation in which the skill level (e.g., manipulation skill level) of the operator, the work item, and an estimated completion time for the work item are associated with one another, and calculates the estimated completion time for the operator to perform a work of the work item with reference to the table. The selection part 14 calculates the estimated completion time for each of the operators entered in the server 10.

The selection part 14 selects, for the first work item shown in Fig. 7, an operator in connection with an estimated completion time which is equal to or shorter than the predetermined time from the operators. Similarly, the selection part 14 selects, for each of the second to fourth work items shown in Fig. 7, an operator with an estimated completion time which is equal to or shorter than the predetermined time from the operators.

As described above, the selection part 14 selects, based on the information including the operator information and the work item information, the work team A from the operators to satisfy the first priority criterion.

Subsequently, the selection part 14 selects, based on the information including the operator information and the work item information, the work team B from the operators to satisfy the second priority criterion. As shown in Fig. 12, the work team B is selected as a team satisfying the priority criterion of achieving a lower "cost". At least one of the four operator candidates for the work team B serving as the second work team differs from that for the work team A serving as the first work team.

Specifically, in the embodiment, the second priority information is information for specifying the second priority criterion (priority criterion concerning the cost incurring in the operation of the construction machine 50) to be prioritized subsequent to the first priority criterion. The selection part 14 sets, based on the second priority information included in the employment information, the criterion concerning the cost incurring in the operation of the construction machine 50 to the second priority criterion among the priority criteria, and stores the second priority criterion.

The second priority criterion is set, for example, as a criterion of completing the work item in the work item information included in the employment information shown in Fig. 7 at a set cost or lower. The specific example shown in Fig. 12 includes the set cost of JPY 120,000.

The selection part 14 stores a table having a relation in which a rank of the skill level of the operator, the work item, and a cost for the work item are associated with one another, and calculates the cost incurring in the work of the work item performed by the operator with reference to the table. The selection part 14 calculates the cost for each of the operators entered in the server 10.

The selection part 14 further selects four operators in combination from the plurality of operators so that a total cost incurring for the first to fourth work items shown in Fig. 7 reaches the set cost or lower.

As described above, the selection part 14 selects, based on the information including the operator information and the work item information, the work team B from the operators to satisfy the second priority criterion.

Moreover, the selection part 14 selects, based on the information including the operator information and the work item information, the work team C from the operators to satisfy the third priority criterion. As shown in Fig. 12, the work team C is selected as a team having the rank "A" for "accuracy" and satisfying the priority criterion of achieving a higher accuracy. Here, although the work team A has the rank "S" for the evaluation of "accuracy", the work team A is already selected and thus excluded from options for the third candidate. The work team C serving as the candidate for the third work team includes at least one of four operator candidates who is different from that for each of the work team A and the work team B.

Specifically, in the embodiment, the third priority information is information for specifying the third priority criterion (priority criterion concerning the accuracy of the operation of the construction machine 50) to be prioritized subsequent to the second priority criterion. The selection part 14 sets, based on the third priority information included in the employment information, the criterion concerning the accuracy of the operation of the construction machine 50 to the third priority criterion among the priority criteria, and stores the third priority criterion.

The third priority criterion is set, for example, as a criterion of completing the work item in the work item information included in the employment information shown in Fig. 7 at a predetermined accuracy rank or higher. The selection part 14 stores a plurality of accuracy ranks set in advance. In the specific example shown in Fig. 12, the predetermined accuracy rank among the accuracy ranks is set to rank "A".

The selection part 14 stores a table having a relation in which the skill level (e.g., at least one of the manipulation skill level and the level of the work performance) of the operator, the work item, and an accuracy (operation accuracy) are associated with one another, and calculates an accuracy rank in a case where the operator performs the work of the work item with reference to the table. The selection part 14 calculates the accuracy rank for each of the operators entered in the server 10.

The selection part 14 selects, from the operators, an operator having an accuracy rank which is equal to or higher than the predetermined accuracy rank for the first work item shown in Fig. 7. Similarly, the selection part 14 selects, from the operators, an operator having an accuracy rank which is equal to or higher than the predetermined accuracy rank for each of the second to the fourth work items shown in Fig. 7.

As described above, the selection part 14 selects, based on the information including the operator information and the work item information, the work team C from the operators to satisfy the third priority criterion.

In the embodiment, the criterion about the cooperability in the operation of the construction machine 50 is not set as any one of the first to third priority criteria among the priority criteria set in advance as the selection criteria candidates. However, when the criterion concerning the cooperability is, for example, set as the first priority criterion, a work team is selected in the following manner. The operator information database 16 stores, as the operator information, the number of forming the work team (number of team forming) by adopting the same members in past. The criterion concerning the cooperability is a criterion, for example, that the number of team forming is equal to or larger than a set number which is set in advance. When the criterion concerning the cooperability is set as the first priority criterion, the selection part 14 selects, from the operators, the work team having the set number of team forming.

The selection part 14 may preferably select at least one operator having a high management skill as a member of the work team in the selection of the work team. In the specific example shown in Fig. 12, each of the work teams A, B, and C includes an operator having the skill level at the rank "S" as shown in Fig.8. The operator also has the management skill of 5.0 as shown in Fig. 8. For instance, the selection part 14 may preferably store, as a criterion of selecting a member for the work team, a leader criterion that the member for the work team has the management skill at a value which is equal to or higher than a standard value, e.g., 4.5, set in advance. The selection part 14 may preferably select the work team A in further consideration of satisfying the leader criterion, for example, when selecting, based on the information including the operator information and the work item information, the work team A from the operators to satisfy the first priority criterion as described above.

As shown in Fig. 12, each operator list has a browser button (detail button) for allowing the orderer to see a work level. When the orderer selects the browser button, the orderer terminal 20 sends a query request as described above to the server 10. The server 10 reads out a skill level of the corresponding operator from the operator information database 16, and sends the read skill level to the orderer terminal 20. The orderer thus can know a skill level of an operator attractive to the orderer among the operators shown in the operator list. The orderer can consequently determine an operator who meets the request for the operation while confirming the skill level of each of the operators shown in the operator list.

Although described herein is that the skill level of the operator is notified to the orderer in response to the selection, serving as a trigger, of the browser button displayed in the operator list, the notifying way is a mere example. For instance, the skill level of each of the operators may be displayed in the operator list in advance.

Although the selection part 14 selects a candidate for the work team from the plurality of operators in the embodiment, the present invention should not be limited thereto. In the present invention, the selection part may select at least one operator candidate for performing the operation of the construction machine from the operators in place of the selection of the work team candidate. Specifically, for instance, the selection part 14 may individually select an operator candidate for each of the first to fourth work items shown in Fig. 7. More specifically, regarding each of the work items, the selection part 14 can select, from the operators, an operator candidate to satisfy the first priority criterion and another operator candidate to satisfy the second priority criterion, based on the information including the operator information and the work item information. The presentation part 12 presents the selected operator candidates to the orderer terminal 20.

As described above, in the skill information presentation system and the skill information presentation method according to the embodiment, the presentation part presents, to the orderer terminal, the operator information including the manipulation skill level and the necessary skill level calculated by the skill level calculation part. Specifically, in the embodiment, a comprehensive skill of the operator including the manipulation skill level and the necessary skill level is evaluated, and thus the orderer can know the comprehensive skill of the operator.

In the embodiment, the necessary skill information includes the information about the management skill, the information about the morality, the information about the actual work performance of the operation of the construction machine, the information about the safety consciousness, and the information about the interpersonal communication skill. Therefore, the orderer can determine, based on the presented level of the necessary skill of the operator, whether the operator has a management skill, a skill of considering other operator or other worker, a skill of appropriately coping with a situation on the operation site of the operation for which the orderer places an order, and a skill of cooperating with other operator in the operation.

In the embodiment, the acquisition part acquires employment information sent from the orderer terminal and including work item information about a work item of the operation of the construction machine. The server further includes: an employment information database which stores the employment information; and a selection part which selects, based on information including the operator information and the work item information, at least one operator candidate for performing the operation of the construction machine from the operators. The presentation part presents the at least one operator candidate to the orderer terminal. Accordingly, the orderer can confirm, in the orderer terminal, the at least one operator candidate selected by the selection part, based on the information including the work item information and the operator information included in the employment information. This configuration allows the orderer to easily select an operator who meets the needs of the orderer from the plurality of operators.

In the embodiment, the selection part stores a plurality of priority criteria predetermined as selection criteria candidates preferentially applicable to select the at least one operator candidate from the operators. The employment information further includes first priority information for specifying a priority criterion to be firstly prioritized among the priority criteria. The selection part selects the at least one operator candidate to satisfy the priority criterion specified with the first priority information among the priority criteria. This configuration allows the orderer to select an operator who further meets the needs of the orderer.

In the embodiment, the priority criteria include at least one of: a criterion concerning a work time for the operation of the construction machine; a criterion concerning a cost incurring in the operation of the construction machine; and a criterion concerning an accuracy of the operation of construction machine. The selection part hence can preferentially select, based on the criterion concerning the work time for the operation of the construction machine, an operator candidate capable of rapidly executing the work item included in the employment information. The selection part further can preferentially select, based on the criterion concerning the cost incurring in the operation of the construction machine, an operator candidate capable of executing the work item included in the employment information at a low cost. Moreover, the selection part can preferentially select, based on the criterion concerning the accuracy of the operation of the construction machine, an operator candidate capable of accurately executing the work item included in the employment information.

In the embodiment, the work item information is first work item information about a first work item of the operation of the construction machine. The employment information further includes second work item information about a second work item of the operation of the construction machine. The at least one operator candidate includes a first operator candidate to be selected, based on information including the operator information and the first work item information, from the operators by the selection part, and a second operator candidate to be selected, based on information including the operator information and the second work item information, from the operators by the selection part. The selection part selects each of the first operator candidate and the second operator candidate as a candidate for a work team on a specific operation site. The presentation part presents the candidate for the work team to the orderer terminal. Accordingly, the orderer can confirm, in the orderer terminal, a candidate for the work team selected by the selection part, based on the information including the first work item information, the second work item information, and the operator information included in the employment information. This configuration allows the orderer to easily select a work team which meets the needs of the orderer from the plurality of operators.

In the embodiment, the selection part stores a plurality of priority criteria predetermined as selection criteria candidates preferentially applicable to select a candidate for the work team from the operators. The employment information further includes first priority information for specifying a first priority criterion to be firstly prioritized among the priority criteria. The selection part selects the candidate for the work team to satisfy the first priority criterion. This configuration allows the orderer to select a work team which further meets the needs of the orderer from the plurality of operators.

In the embodiment, the employment information further includes second priority information for specifying a second priority criterion to be prioritized subsequent to the first priority criterion among the priority criteria. The candidate for the work team is a candidate for a first work team. The selection part selects a second work team candidate so that at least one of the first operator candidate and the second operator candidate differs from corresponding one in the first work team candidate to satisfy the second priority criterion. The presentation part presents the candidate for the first work team and the candidate for the second work team to the orderer terminal. Accordingly, the orderer can confirm, in the orderer terminal, a candidate for the first work team to satisfy the first priority criterion to be firstly prioritized and a candidate for the second work team to satisfy the second priority criterion to be prioritized subsequent to the first priority. This configuration allows the orderer to further easily select a work team which meets the needs of the orderer from the plurality of operators, and have an increased selectivity of the work team.

In the embodiment, the priority criteria include: a criterion concerning a work time for the operation of the construction machine; a criterion concerning a cost incurring in the operation of the construction machine; a criterion concerning an accuracy of the operation of construction machine; and a criterion concerning a cooperability in the operation of the construction machine. The selection part can preferentially select, based on the criterion concerning the work time for the operation of the construction machine, a work team candidate capable of rapidly executing a work item included in the employment information. The selection part further can preferentially select, based on the criterion concerning the cost incurring in the operation of the construction machine, a work team candidate capable of executing the work item included in the employment information at a low cost. Moreover, the selection part can preferentially select, based on the criterion concerning the accuracy of the operation of the construction machine, a work team candidate capable of accurately executing the work item included in the employment information. Additionally, the selection part can preferentially select, based on the criterion concerning the cooperability in the operation of the construction machine, a work team candidate constituted by a plurality of operators who can efficiently cooperate with each other for the work item included in the employment information.

### Modifications

The present invention can adopt modifications described below.

(A) Although the necessary skill information includes the information about the management skill, the information about the morality, the information about the actual work performance of the operation of the construction machine, the information about the safety consciousness, and the information about the interpersonal communication skill in the embodiment, the present invention should not be limited thereto. In the present invention, the necessary skill information may include at least one of: the information about the management skill; the information about the morality; the information about the actual work performance of the operation of the construction machine; the information about the safety consciousness; and the information about the interpersonal communication skill. Moreover, in the present invention, the necessary skill information may include information except the information exemplified in the embodiment, or may be constituted only by the information except the information exemplified in the embodiment.

(B) Although the operation of the construction machine represents a construction operation to be executed by the hydraulic excavator in the embodiment, the present invention should not be limited thereto. In the invention, the operation of the construction machine may include, for example, a demolition operation and a forestry operation. The demolition operation covers, for example, a demolition operation to be executed by a nibbler, and a sorting operation to be executed by a grappler. The forestry operation covers, for example, a tree selection operation, a felling operation, and a pruning operation.

(C) Although the presentation part 12 presents a work team candidate in the embodiment, the presentation part may select and present an operator individually.

### Summary of embodiment

The technical features of the embodiment will be summarized below.

A skill information presentation system according to one aspect of the embodiment is a system for presenting information about a skill of a remote manipulation of a construction machine. The skill information presentation system includes a server communicably connected to an orderer terminal which allows an orderer to place an order for an operation to be executed by the construction machine by the remote manipulation, and communicably connected to a remote manipulating device for remotely manipulating the construction machine. The server includes: an acquisition part which acquires manipulation skill information about a manipulation skill of one operator, among a plurality of operators, who has remotely manipulated the construction machine by using the remote manipulating device, and further acquires necessary skill information about a necessary skill of the operator other than the manipulation skill and necessary for the operation of the construction machine; a manipulation skill information database which stores the manipulation skill information; a necessary skill information database which stores the necessary skill information; a skill level calculation part which calculates, based on the manipulation skill information, a manipulation skill level which is a level of the manipulation skill, and calculates, based on the necessary skill information, a necessary skill level which is a level of the necessary skill; an operator information database which stores operator information including the manipulation skill level and the necessary skill level; and a presentation part which presents the operator information to the orderer terminal.

In the skill information presentation system, the presentation part presents, to the orderer terminal, the operator information including the manipulation skill level and the necessary skill level calculated by the skill level calculation part. The orderer thus can know the necessary skill level of the operator as well as the manipulation skill level of the operator. This configuration allows the orderer to safely select an operator who meets the needs of the orderer from the plurality of operators.

In the skill information presentation system, the necessary skill information may include at least one of: information about a management skill required to perform at least one of administration and planning of the operation of the construction machine; information about a morality necessary for the operation of the construction machine; information about an actual work performance of construction machine; information about a safety consciousness necessary for the operation of the construction machine; and information about an interpersonal communication skill necessary for the operation of the construction machine.

In this aspect, the orderer can determine, based on the level of the management skill of the operator presented to the orderer terminal, whether the operator has a skill of performing at least one of the administration and planning of the operation of the construction machine. The orderer can determine, based on the level of the morality of the operator presented to the orderer terminal, whether the operator has a skill of considering other operator or other worker. The orderer can determine, based on the level of the actual work performance of the operator presented to the orderer terminal, whether the operator has a skill of appropriately coping with a situation on the site for the operation ordered by the orderer. The orderer can determine, based on the information about the safety consciousness of the operator presented to the orderer terminal, whether the operator has a skill of considering other operator or other worker. The orderer can determine, based on the level of the interpersonal communication skill presented to the orderer terminal, whether the operator has a skill of considering other operator or other worker, and whether the operator can cooperate with the other operator in the operation.

In the skill information presentation system, the acquisition part preferably acquires employment information sent from the orderer terminal and including work item information about a work item of the operation of the construction machine. The server preferably includes: an employment information database which stores the employment information; and a selection part which selects, based on information including the operator information and the work item information, at least one operator candidate for performing the operation of the construction machine from the operators. The presentation part preferably presents the at least one operator candidate to the orderer terminal.

In this aspect, the orderer can confirm, in the orderer terminal, the at least one operator candidate selected by the selection part, based on the information including the work item information and the operator information included in the employment information. This configuration allows the orderer to easily select an operator who meets the needs of the orderer from the plurality of operators.

In the skill information presentation system, the selection part may store a priority criterion preferentially applicable to select the at least one operator candidate from the operators. The selection part may further select, based on the information including the operator information and the work item information, at least the one operator candidate from the operators to satisfy the first priority criterion.

This aspect allows the selection part to preferentially select an operator candidate to satisfy the priority criterion. Here, the priority criterion may be stored in the selection part in advance. The priority criterion may be stored in the selection part, based on the priority information sent from the orderer terminal. This configuration allows the orderer to select an operator who further meets the needs of the orderer. The priority information may be included, for example, in the employment information, and may be information sent independently of the employment information from the orderer terminal to the server.

In the skill information presentation system, the selection part preferably stores a plurality of priority criteria predetermined as selection criteria candidates preferentially applicable to select the at least one operator candidate from the operators. The employment information preferably further includes first priority information for specifying a first priority criterion to be firstly prioritized among the priority criteria. The selection part preferably selects, based on the information including the operator information and the work item information, at least the one operator candidate from the operators to satisfy the first priority criterion.

In this aspect, an operator candidate is selected to satisfy the first priority criterion specified with the first priority information included in the employment information. This configuration allows the orderer to select an operator who further meets the needs of the orderer.

In the skill information presentation system, the priority criteria may include at least one of: a criterion concerning a work time for the operation of the construction machine; a criterion concerning a cost incurring in the operation of the construction machine; and a criterion concerning an accuracy of the operation of construction machine.

In this aspect, the selection part can preferentially select, based on the criterion concerning the work time for the operation of the construction machine, an operator candidate capable of rapidly executing the work item included in the employment information. The selection part further can preferentially select, based on the criterion concerning the cost incurring in the operation of the construction machine, an operator candidate capable of executing the work item included in the employment information at a low cost. Moreover, the selection part can preferentially select, based on the criterion concerning the accuracy of the operation of the construction machine, an operator candidate capable of accurately executing the work item included in the employment information.

In the skill information presentation system, the work item information is preferably first work item information about a first work item of the operation of the construction machine. The employment information preferably further includes second work item information about a second work item of the operation of the construction machine. The at least one operator candidate preferably includes a first operator candidate to be selected, based on information including the operator information and the first work item information, from the operators by the selection part, and a second operator candidate to be selected, based on information including the operator information and the second work item information, from the operators by the selection part. The selection part preferably selects each of the first operator candidate and the second operator candidate as a candidate for a work team on a specific operation site. The presentation part preferably presents the candidate for the work team to the orderer terminal.

In this aspect, the orderer can confirm, in the orderer terminal, the work team candidate selected by the selection part, based on the information including the first work item information, the second work item information, and the operator information included in the employment information. This configuration allows the orderer to easily select a work team which meets the needs of the orderer from the plurality of operators.

In the skill information presentation system, the selection part may store a priority criterion preferentially applicable to select the candidate for the work team from the operators. The selection part may select, based on the information including the operator information and the work item information, the candidate for the work team from the operators to satisfy the first priority criterion.

This aspect allows the selection part to preferentially select a candidate for the work team to satisfy the priority criterion. Here, the priority criterion may be stored in the selection part in advance. The priority criterion may be stored in the selection part, based on the priority information sent from the orderer terminal. This configuration allows the orderer to select a work team which further meets the needs of the orderer from the plurality of operators. The priority information may be included, for example, in the employment information, and may be information sent independently of the employment information from the orderer terminal to the server.

In the skill information presentation system, the selection part preferably stores a plurality of priority criteria predetermined as selection criteria candidates preferentially applicable to select the candidate for the work team from the operators. The employment information preferably further includes first priority information for specifying a first priority criterion to be firstly prioritized among the priority criteria. The selection part preferably selects, based on the information including the operator information and the work item information, the candidate for the work team from the operators to satisfy the first priority criterion.

In this aspect, a candidate for the work team is selected to satisfy the first priority criterion specified with the first priority information included in the employment information. This configuration allows the orderer to select a work team which further meets the needs of the orderer from the plurality of operators.

In the skill information presentation system, the employment information may further include second priority information for specifying a second priority criterion to be prioritized subsequent to the first priority criterion among the priority criteria. The candidate for the work team may be a candidate for a first work team. The selection part may select, based on the information including the operator information and the work item information, a candidate for a second work team from the operators to satisfy the second priority criterion so that at least one operator candidate among a plurality of operator candidates each included as the candidate for the second work team differs from the first operator candidate and the second operator candidate each included as the candidate for the first work team. The presentation part may present the candidate for the first work team and the candidate for the second work team to the orderer terminal.

In this aspect, the orderer can confirm, in the orderer terminal, a candidate for the first work team to satisfy the first priority criterion to be firstly prioritized and a candidate for the second work team to satisfy the second priority criterion to be prioritized subsequent to the first priority. This configuration allows the orderer to easily select a work team which meets the needs of the orderer from the plurality of operators, and have an increased selectivity of the work team.

In the skill information presentation system, the priority criteria may include at least one of: a criterion concerning a work time for the operation of the construction machine; a criterion concerning a cost incurring in the operation of the construction machine; a criterion concerning an accuracy of the operation of construction machine; and a criterion concerning a cooperability in the operation of the construction machine.

In this aspect, the selection part can preferentially select, based on the criterion concerning the work time for the operation of the construction machine, a work team candidate capable of rapidly executing a work item included in employment information. The selection part further can preferentially select, based on the criterion concerning the cost incurring in the operation of the construction machine, a work team candidate capable of executing the work item included in the employment information at a low cost. Moreover, the selection part can preferentially select, based on the criterion concerning the accuracy of the operation of the construction machine, a work team candidate capable of accurately executing the work item included in the employment information. Additionally, the selection part can preferentially select, based on the criterion concerning the cooperability in the operation of the construction machine, a work team candidate constituted by a plurality of operators who can efficiently cooperate with each other for the work item included in the employment information.

A skill information presentation method according to the present invention is a skill information presentation method for presenting skill information about a skill of a remote manipulation of the construction machine. The method according to the present invention is a skill information presentation method in a server communicably connected to an orderer terminal which allows an orderer to place an order for an operation to be executed by the construction machine by the remote manipulation, and communicably connected to a remote manipulating device for remotely manipulating the construction machine. The skill information presentation method includes: acquiring manipulation skill information about a manipulation skill of one operator, among a plurality of operators, who has remotely manipulated the construction machine by using the remote manipulating device; acquiring necessary skill information about a necessary skill of the operator other than the manipulation skill and necessary for the operation of the construction machine; calculating, based on the manipulation skill information, a manipulation skill level which is a level of the manipulation skill, and calculating, based on the necessary skill information, a necessary skill level which is a level of the necessary skill; storing, in an operator information database included in the server, operator information including the manipulation skill level and the necessary skill level; and presenting the operator information to the orderer terminal.

In the skill information presentation method, the presentation part presents, to the orderer terminal the operator, the operator information including the manipulation skill level and the necessary skill level calculated by the skill level calculation part. The orderer thus can know the necessary skill level of the operator as well as the manipulation skill level of the operator. This configuration allows the orderer to safely select an operator who meets the needs of the orderer from the plurality of operators.

The skill information presentation method preferably further includes: storing, in an employment information database included in the server, employment information sent from the orderer terminal and including work item information about a work item of the operation of the construction machine; selecting, based on information including the operator information and the work item information, at least one operator candidate for performing the operation of the construction machine from the operators by a selection part included in the server; and presenting the at least one operator candidate to the orderer terminal by a presentation part.

In this aspect, the orderer can confirm, in the orderer terminal, the at least one operator candidate selected by the selection part, based on the information including the work item information and the operator information included in the employment information. This configuration allows the orderer to easily select an operator who meets the needs of the orderer from the plurality of operators.

## Claims

1. A skill information presentation system for presenting information about a skill of a remote manipulation of a construction machine, comprising:
a server communicably connected to an orderer terminal which allows an orderer to place an order for an operation to be executed by the construction machine by the remote manipulation, and communicably connected to a remote manipulating device for remotely manipulating the construction machine, wherein
the server includes:
an acquisition part which acquires manipulation skill information about a manipulation skill of one operator, among a plurality of operators, who has remotely manipulated the construction machine by using the remote manipulating device, and further acquires necessary skill information about a necessary skill of the operator other than the manipulation skill and necessary for the operation of the construction machine;
a manipulation skill information database which stores the manipulation skill information;
a necessary skill information database which stores the necessary skill information;
a skill level calculation part which calculates, based on the manipulation skill information, a manipulation skill level which is a level of the manipulation skill, and calculates, based on the necessary skill information, a necessary skill level which is a level of the necessary skill;
an operator information database which stores operator information including the manipulation skill level and the necessary skill level; and
a presentation part which presents the operator information to the orderer terminal.

2. The skill information presentation system according to claim 1, wherein
the necessary skill information includes at least one of:
information about a management skill required to perform at least one of administration and planning of the operation of the construction machine;
information about a morality necessary for the operation of the construction machine;
information about an actual work performance of the operation of construction machine;
information about a safety consciousness necessary for the operation of the construction machine; and
information about an interpersonal communication skill necessary for the operation of the construction machine.

3. The skill information presentation system according to claim 1 or 2, wherein
the acquisition part acquires employment information sent from the orderer terminal and including work item information about a work item of the operation of the construction machine,
the server further includes:
an employment information database which stores the employment information; and
a selection part which selects, based on information including the operator information and the work item information, at least one operator candidate for performing the operation of the construction machine from the operators, and
the presentation part presents the at least one operator candidate to the orderer terminal.

4. The skill information presentation system according to claim 3, wherein
the selection part is configured to:
store a priority criterion preferentially applicable to select the at least one operator candidate from the operators; and
select, based on the information including the operator information and the work item information, the at least one operator candidate from the operators to satisfy the priority criterion.

5. The skill information presentation system according to claim 3, wherein
the selection part stores a plurality of priority criteria predetermined as selection criteria candidates preferentially applicable to select the at least one operator candidate from the operators,
the employment information further includes first priority information for specifying a first priority criterion to be firstly prioritized among the priority criteria, and
the selection part selects, based on the information including the operator information and the work item information, at least the one operator candidate from the operators to satisfy the first priority criterion.

6. The skill information presentation system according to claim 5, wherein
the priority criteria include at least one of:
a criterion concerning a work time for the operation of the construction machine;
a criterion concerning a cost incurring in the operation of the construction machine; and
a criterion concerning an accuracy of the operation of construction machine.

7. The skill information presentation system according to claim 3, wherein
the work item information is first work item information about a first work item of the operation of the construction machine,
the employment information further includes second work item information about a second work item of the operation of the construction machine,
the at least one operator candidate includes a first operator candidate to be selected, based on information including the operator information and the first work item information, from the operators by the selection part, and a second operator candidate to be selected, based on information including the operator information and the second work item information, from the operators by the selection part,
the selection part selects each of the first operator candidate and the second operator candidate as a candidate for a work team on a specific operation site, and
the presentation part presents the candidate for the work team to the orderer terminal.

8. The skill information presentation system according to claim 7, wherein
the selection part is configured to:
store a priority criterion preferentially applicable to select the candidate for the work team from the operators; and
select, based on the information including the operator information and the work item information, the candidate for the work team from the operators to satisfy the priority criterion.

9. The skill information presentation system according to claim 7, wherein
the selection part stores a plurality of priority criteria predetermined as selection criteria candidates preferentially applicable to select the candidate for the work team from the operators,
the employment information further includes first priority information for specifying a first priority criterion to be firstly prioritized among the priority criteria, and
the selection part selects, based on the information including the operator information and the work item information, the candidate for the work team from the operators to satisfy the first priority criterion.

10. The skill information presentation system according to claim 9, wherein
the employment information further includes second priority information for specifying a second priority criterion to be prioritized subsequent to the first priority criterion among the priority criteria,
the candidate for the work team is a candidate for a first work team,
the selection part selects, based on the information including the operator information and the work item information, a candidate for a second work team from the operators to satisfy the second priority criterion so that at least one operator candidate among a plurality of operator candidates each included as the candidate for the second work team differs from the first operator candidate and the second operator candidate each included as the candidate for the first work team, and
the presentation part presents the candidate for the first work team and the candidate for the second work team to the orderer terminal.

11. The skill information presentation system according to claim 9 or 10, wherein
the priority criteria include at least one of:
a criterion concerning a work time for the operation of the construction machine;
a criterion concerning a cost incurring in the operation of the construction machine;
a criterion concerning an accuracy of the operation of the construction machine; and
a criterion concerning a cooperability in the operation of the construction machine.

12. A skill information presentation method for presenting information about a skill of a remote manipulation of a construction machine, in a server communicably connected to an orderer terminal which allows an orderer to place an order for an operation to be executed by the construction machine by the remote manipulation, and communicably connected to a remote manipulating device for remotely manipulating the construction machine, the method comprising:
acquiring manipulation skill information about a manipulation skill of one operator, among a plurality of operators, who has remotely manipulated the construction machine by using the remote manipulating device;
acquiring necessary skill information about a necessary skill of the operator other than the manipulation skill and necessary for the operation of the construction machine;
calculating, based on the manipulation skill information, a manipulation skill level which is a level of the manipulation skill, and calculating, based on the necessary skill information, a necessary skill level which is a level of the necessary skill;
storing, in an operator information database included in the server, operator information including the manipulation skill level and the necessary skill level; and
presenting the operator information to the orderer terminal.

13. The skill information presentation method according to claim 12, further comprising:
storing, in an employment information database included in the server, employment information sent from the orderer terminal and including work item information about a work item of the operation of the construction machine;
selecting, based on information including the operator information and the work item information, at least one operator candidate for performing the operation of the construction machine from the operators; and
presenting the at least one operator candidate to the orderer terminal.
